# EUROPÄISCHE PATENTSCHRIFT

(11) **EP 2 213 398 B1**
(45) Veröffentlichungstag und Bekanntmachung des Hinweises auf die Patenterteilung: **22.03.2017**
(21) Anmeldenummer: 09013925.4
(22) Anmeldetag: 06.11.2009
(51) Int. Cl.: B23D 47/02, B27B 27/04

(54) **Kapp- und Gehrungssäge**
Compound mitre saw
Scie à onglet du type combiné

(30) Priorität: 30.01.2009 DE 202009001184 U
(43) Veröffentlichungstag der Anmeldung: 04.08.2010
(73) Patentinhaber: Metabowerke GmbH, 72622 Nürtingen (DE)
(72) Erfinder: Siepker, Alois, 49716 Meppen (DE)
(74) Vertreter: Lorenz, Markus

(56) Entgegenhaltungen:
- EP-A1- 1 671 763
- EP-A2- 1 902 802
- JP-A- 2001 145 901
- US-A- 5 752 422
- US-A1- 2005 247 177
- US-A1- 2006 266 185

## Beschreibung

Die Erfindung betrifft eine Kapp- und Gehrungssäge mit den Merkmalen des Oberbegriffs von Anspruch 1 bzw. mit den Merkmalen des Oberbegriffs von Anspruch 5. Eine solche Kapp- und Gehrungssäge ist der US2006/0266185 A1 zu entnehmen.

Eine bekannte Kapp- und Gehrungssäge (DE-U-20 2006 012 601) weist einen Träger auf, mit dem sie auf einer Unterlage, beispielsweise einer Werkbank steht. Bei dieser Kapp- und Gehrungssäge bildet der Träger selbst randseitig seitliche Auflageflächen. In den Träger ist ein um eine Hochachse drehbar gelagerter Drehtisch eingelassen. Zusammen mit den seitlichen Auflageflächen bildet dieser Drehtisch eine Werkstückauflagefläche. Mittig weist die Werkstückauflagefläche im Bereich des Drehtisches einen Eintauchschlitz für den Zahnkranz eines Sägeblattes auf.

Es gibt auch Varianten dieser Kapp- und Gehrungssäge, bei denen der Träger seitlich des Drehtisches auf ein kleines Stück reduziert ist und nur eine geringe oder keine Auflagefläche bildet.

Bei der bekannten, zuvor erläuterten Kapp- und Gehrungssäge befindet sich am Drehtisch, der einen Teil des Trägers bildet, eine Halterung für ein Sägeaggregat, das oberhalb der Werkstückauflagefläche angeordnet ist und einen Antriebsmotor sowie ein davon angetriebenes Sägeblatt aufweist. Dieses Sägeaggregat definiert mit der Ebene des Sägeblattes eine Sägeschnittrichtung. Diese findet sich in der Ausrichtung des Eintauchschlitzes in der Werkstückauflagefläche wieder.

Das Sägeaggregat kann an der Halterung um eine Querachse geschwenkt werden, und zwar aus einer angehobenen Ruhestellung in eine abgesenkte Sägestellung und umgekehrt. Mit dieser Bewegung des Sägeblattes kann ein auf der Werkstückauflagefläche befindliches Werkstück abgeschnitten - gekappt - werden.

Zur Fixierung des Werkstückes auf der Werkstückauflagefläche dient ein Werkstückanschlag, der sich in der mittigen Grundstellung des Sägeaggregates bzw. des Drehtisches rechtwinklig bezüglich der Ebene des Sägeblattes, also quer zur Sägeschnittrichtung, in dieser Position des Sägeaggregates erstreckt. Damit ist es möglich, das Werkstück "gegen" den Werkstückanschlag zu sägen.

Bei der bekannten, zuvor erläuterten Kapp- und Gehrungssäge ist die Schnittlänge dadurch größer als durch den Durchmesser des Sägeblattes vorgegeben, daß zusätzlich eine Zugfunktion realisiert ist. Das Sägeblatt kann hier das Werkstück nicht nur infolge der Schwenkbewegung um die Querachse durchtrennen, sondern zusätzlich auch infolge einer Verschiebebewegung senkrecht zur Querachse und parallel zur Werkstückauflagefläche. Die bekannte Kapp- und Gehrungssäge ist somit eine kombinierte Kapp-, Gehrungs- und Zugsäge. Sie zeichnet sich weiter dadurch aus, daß der Drehtisch einen kleinen Durchmesser hat, jedoch einen Auslegerarm mit darin fortgesetztem Eintauchschlitz aufweist.

Eine der zuvor erläuterten Konstruktion ähnliche Konstruktion findet sich auch in anderem Stand der Technik (EP-A-1 902 802).

Die Erfindung läßt sich bei einer Kapp- und Gehrungssäge mit einem Drehtisch mit Auslegerarm ebenso verwirklichen wie bei einer Kapp- und Gehrungssäge mit einem Drehtisch ohne Auslegerarm (DE-A-29 29 932) sowie bei einer Kapp- und Gehrungssäge in Form einer Radialarmsäge ohne oder mit Höhenverstellung (US-A-4,152,961).

Bei Kapp- und Gehrungssägen der in Rede stehenden Art weist die Werkstückauflagefläche in Sägeschnittrichtung, definiert bei in der mittigen Grundstellung befindlichem Sägeaggregat, eine bestimmte Tiefe und quer zur Sägeschnittrichtung in dieser Position des Sägeaggregates eine bestimmte Breite auf. Das Werkstück kann aber in seinen Abmessungen durchaus wesentlich größer als die Werkstückauflagefläche, insbesondere wesentlich breiter oder wesentlich tiefer sein. In diesem Fall liegt das Werkstück nicht optimal auf, der Sägeschnitt im Werkstück kann nicht so präzise ausgeführt werden, wie man sich das eigentlich wünscht.

In Erkennung des zuvor erläuterten Problems ist bei der bekannten Kapp- und Gehrungssäge am Träger zumindest an einer Seite, tatsächlich aber an der linken und an der rechten Querseite, jeweils ein eine Zusatzfläche bildender Zusatzträger anbringbar, durch den die für die Unterstützung eines Werkstückes wirksame Breite der Werkstückauflagefläche vergrößerbar ist. Dazu sind bei der bekannten Kapp- und Gehrungssäge am Träger an der linken und rechten Querseite jeweils Steckfassungen vorgesehen, in die man entsprechende Auflageverlängerungen einstecken kann (siehe beispielsweise DE-U-20 2006 001 892).

Neben einsteckbaren Zusatzträgern, die nur in der Breite die Werkstückauflagefläche vergrößern, ist es auch bekannt, die Werkstückauflagefläche in der Tiefe oder kombiniert in der Breite und Tiefe zu vergrößern (EP-A-1 902 802). Dort ist vorgesehen, daß die Zusatzfläche des am Träger angebrachten Zusatzträgers gegenüber dem Träger zwischen einer dem Träger nahen Grundposition und einer vom Träger weitestmöglich entfernten Distanzposition verstellbar, nämlich mittels einer Stangen-Verschiebeführung verschiebbar ist. Die Anbringung des Zusatzträgers erfolgt hier an der Vorderseite des Trägers seitlich neben dem Auslegerarm des Drehtisches.

Eine größere Breite eines Werkstückes läßt nicht nur den Wunsch nach einer größeren Breite der unterstützenden Werkstückauflagefläche aufkommen, sondern auch den Wunsch nach einer Verbreiterung des Werkstückanschlags.

Bei der aus US-A-2008/0022824 bekannten Kapp- und Gehrungssäge ist eine Verbreiterung des Werkstückanschlages in verstellbarer Weise durch einen Zusatzschlag realisiert. An dem Werkstückanschlag, dort links vom Sägeaggregat, ist ein die Anschlagfläche für das Werkstück vergrößernder Zusatzanschlag angeordnet. Dieser ist in einer Verschiebeführung auf der Oberseite des Werkstückanschlags angebracht und zwischen einer Grundposition nahe dem Sägeaggregat und mit in der Breite weitgehender Überdeckung mit dem Werkstückanschlag und einer vom Sägeaggregat entfernten Distanzposition mit in der Breite nur noch geringer Überdeckung mit dem Werkstückanschlag in Breitenrichtung verstellbar. Die jeweilige Position des Zusatzanschlags am Werkstückanschlag läßt sich über eine Spanneinrichtung fixieren.

Einen Zusatzanschlag der zuvor erläuterten Konstruktion kann man mit einem Zusatzträger gemeinsam einsetzen. Auch das ist bereits aus dem Stand der Technik bekannt (DE-U-201 14 319).

Es hat sich gezeigt, daß ein Zusatzanschlag der bekannten Konstruktion bei einer Kapp- und Gehrungssäge der in Rede stehenden Art bei flachen, plattenartigen Werkstücken keine Verbesserung der Schnittgenauigkeit bringt. Der Zusatzanschlag ist nämlich für flache, plattenartige Werkstücke wirkungslos.

In diesem Zusammenhang sind ferner aus dem Stand der Technik Kapp- und Gehrungssägen bekannt, bei denen der Zusatzanschlag in bekannter Weise verstellt wird, jedoch so ausgestaltet ist, dass er zumindest an seinem freien Ende im Wesentlichen bis auf das Niveau der Werkstückauflagefläche reicht (US 2006/0266185 A1, US 5, 752, 422, JP 2001 145901 A, EP 1 902 802 A2 und EP 1 671 763 A1).

Der Lehre liegt daher das Problem zugrunde, die bekannte Kapp- und Gehrungssäge so auszugestalten und weiterzubilden, daß auch breite, jedoch flache Werkstücke mit einer hohen Präzision der Sägeschnitte bearbeitet werden können und zugleich eine einfache Verstellung des Zusatzanschlags ermöglicht wird.

Das zuvor aufgezeigte Problem ist bei einer Kapp- und Gehrungssäge mit den Merkmalen des Oberbegriffs von Anspruch 1 durch die Merkmale des kennzeichnenden Teils von Anspruch 1 gelöst.

Bei der erfindungsgemäßen Kapp- und Gehrungssäge wird der Zusatzanschlag in bekannter Weise verstellt, und dabei ebenfalls so ausgestaltet, daß er zumindest an seinem freien Ende im wesentlichen bis auf das Niveau der Werkstückauflagefläche reicht. Ein beim Stand der Technik vorhandener Spalt zwischen Werkstückauflagefläche und Zusatzanschlag, der für breite, jedoch sehr flache bzw. dünne Werkstücke gegebenenfalls problematisch war, wird durch den erfindungsgemäßen Zusatzanschlag geschlossen oder jedenfalls praktisch geschlossen. Im Rahmen üblicher Toleranzen kann ein minimaler Restspalt zum Niveau der Werkstückauflagefläche natürlich verbleiben. Insgesamt ist mit dieser Konstruktion auch für breite, jedoch sehr flache bzw. dünne Werkstücke eine hohe Präzision der Sägeschnitte gewährleistet.

Von besonderer Bedeutung ist dabei, dass zudem am Träger zumindest an einer Seite ein eine Zusatzfläche bildender Zusatzträger angebracht ist, durch den die für die Unterstützung eines Werkstückes wirksame Breite der Werkstückauflagefläche vergrößerbar ist, daß die Zusatzfläche des am Träger angebrachten Zusatzträgers gegenüber dem Träger zwischen einer dem Träger nahen Grundposition und einer vom Träger entfernten Distanzposition verstellbar ist. In Verbindung mit einem solchen Zusatzträgers ist erfindungsgemäß vorgesehen, daß das freie Ende des Zusatzanschlags an dieser Seite mit dem dort angeordneten Zusatzträger verbunden ist, wobei die Verbindung lösbar ist. Damit kann man erreichen, daß beim seitlichen Verstellen des Zusatzträgers gegenüber dem Träger der Zusatzanschlag gegenüber dem Werkstückanschlag mit verstellt wird.

Mit dieser Konstruktion hat man die optimale Unterstützung breiter und flacher bzw. dünner Werkstücke realisiert, nämlich eine Unterstützung durch die Zusatzfläche des Zusatzträgers und eine saubere Anlage durch die Anschlagfläche des Zusatzanschlages, die bis auf das Niveau der Werkstückauflagefläche hinab reicht.

Bevorzugte Ausgestaltungen und Weiterbildungen der vorliegenden Lehre sind Gegenstand der Ansprüche 2 bis 4.

Die zuvor genannte Problemstellung wird jedoch auch mit einer nebengeordneten Lösung angesprochen, die mit den Merkmalen des Anspruchs 5 beschrieben ist. Eine bevorzugte Ausgestaltung dieser Lösung ist Gegenstand des Anspruchs 6.

Die nebengeordnete Lösung geht von der Überlegung aus, daß dann, wenn ein verstellbarer Zusatzträger am Träger angeordnet ist, dieser von vornherein einen den Werkstückanschlag in Breitenrichtung ergänzenden Zusatzanschlag tragen kann. Je nach der Breite des zu sägenden Werkstückes wird dann der Zusatzträger entsprechend seitlich gegenüber dem Träger verstellt. Da sich der Zusatzanschlag am Zusatzträger befindet, wird auch der Zusatzanschlag von selbst mitverstellt.

Bei dem bekannten Stand der Technik ist zumeist vorgesehen, daß der Zusatzträger am Träger mit Hilfe einer Standgen-Verschiebeführung angebracht ist. Diese Lösung empfiehlt sich auch für die erfindungsgemäße Kapp- und Gehrungssäge. Dabei empfiehlt es sich weiter, den Zusatzträger komplett abnehmbar auszuführen, möglicherweise allerdings mit einer überwindbaren Raste oder einer aus dem Stand der Technik an sich bekannten Positionsfixierung (EP-A-1 902 802).

Im folgenden wird die Erfindung anhand einer lediglich bevorzugte Ausführungsbeiapiele darstellenden Zeichnungen näher erläutert. In der Zeichnung zeigt
- Fig. 1: in perspektivischer Ansicht ein erstes Ausführungsbeispiel einer erfindungsgemäßen Kapp- und Gehrungssäge mit einem Zusatzanschlag in Grundposition,
- Fig. 2: die Kapp- und. Gehrungssäge aus Fig. 1 mit dem Zusatzanschlag in Distanzposition,
- Fig. 3: ein nicht erfindungsgemäßes Beispiel mit einem Zusatzanschlag - angebracht hinter dem Werkstückanschlag,
- Fig. 4: ein weiteres Ausführungsbeispiel mit einem Zusatzanschlag - angebracht an einem Zusatzträger - in Draufsicht.

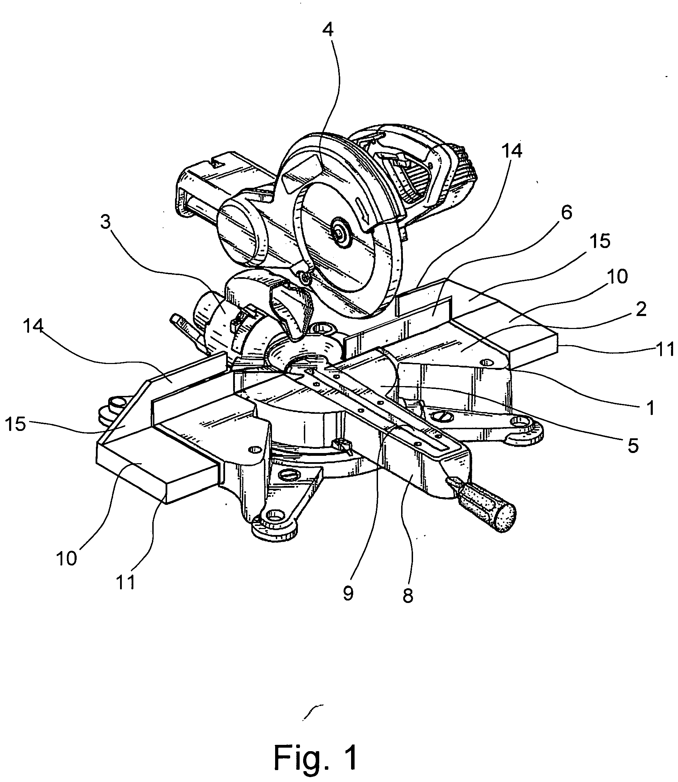

Fig. 1 zeigt den grundsätzlichen Aufbau einer erfindungsgemäßen Kapp- und Gehrungssäge, hier in der Ausführungsform einer kombinierten Kapp-, Gehrungs- und Zugsäge. Die Zugfunktion ist keine zwingende Voraussetzung für die Verwirklichung der Lehre.

Die in Fig. 1 dargestellte Kapp- und Gehrungssäge zeigt einen Träger 1, der eine Werkstückauflagefläche 2 bildet. Am Träger 1 befindet sich eine Halterung 3 für ein oberhalb der Werkstückauflagefläche 2 angeordnetes, eine Sägeschnittrichtung definierendes Sägeaggregat 4.

In der dargestellten, jedoch für die Lehre nicht zwingend notwendigen Konstruktion ist in den Träger 1 ein Drehtisch 5 eingesetzt, der im Träger 1 um eine Hochachse drehbar gelagert ist. Der Träger 1 zusammen mit dem Drehtisch 5 bildet gemeinsam die Werkstückauflagefläche 2.

Am Träger 1 angebracht ist ein Werkstückanschlag 6, an dem zum Ausführen eines Sägeschnittes ein Werkstück 7 angelegt wird. Der Werkstückanschlag 6 verläuft quer zur Sägeschnittrichtung, wenn man diese bei in der mittigen Grundstellung befindlichem Sägeaggregat 4 (Fig. 1) definiert.

Geht man von dem in Grundstellung befindlichen Sägeaggregat 4 und der dadurch definierten Sägeschnittrichtung aus, so hat die Werkstückauflagefläche 2 in Sägeschnittrichtung eine bestimmte Tiefe und quer zur Sägeschnittrichtung eine bestimmte Breite.

Im hier dargestellten, besonderen Ausführungsbeispiel der Kapp- und Gehrungssäge mit dem eingelassenen Drehtisch 5 wird eine ausreichende Schnittlänge für das hier in Längsrichtung verschiebbare Sägeaggregat 4 durch den Auslegerarm 8 am Drehtisch 5 gewährleistet. Im Drehtisch 5 und Auslegerarm 8 befindet sich ein Eintauchschlitz 9 für den Zahnkranz des Sägeblattes des Sägeaggregats 4. Der Eintauchschlitz 9 definiert ebenfalls die Sägeschnittrichtung.

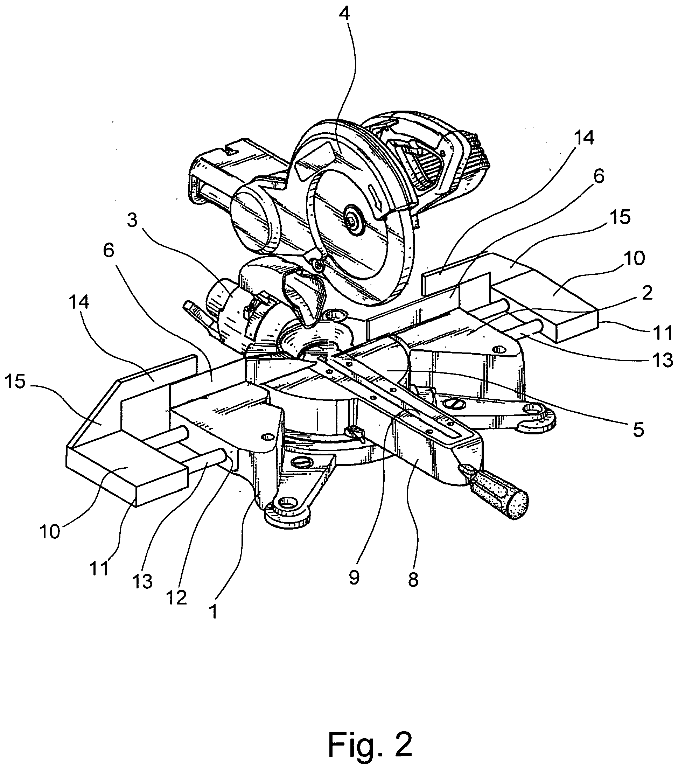

In Fig. 1 und 2 kann man im Zusammenhang gut erkennen, daß am Träger 1, hier an einer Querseite, meist aber an beiden Querseiten, ein eine Zusatzfläche 10 bildender Zusatzträger 11 angebracht ist, durch den die für die Unterstützung eines Werkstückes wirksame Breite vergrößerbar ist. In Fig. 1 befindet sich der Zusatzträger 11 direkt am Träger 1 in seiner Grundposition, in Fig. 2 befindet sich dieser Zusatzträger 11 in einer vom Träger 1 weitestmöglich entfernten Distanzposition zur Unterstützung besonders breiter Werkstücke. In Fig. 2 erkennt man links im Träger 1 vorgesehene Steckfassungen 12, in die Tragstangen 13 des Zusatzträgers 11 eingesteckt sind. Mit dieser Stangenführung ist der Zusatzträger 11 gegenüber dem Träger 1 verschiebbar.

Fig. 1 und 2 zeigen im Zusammenhang ferner, daß an dem Werkstückanschlag 6, hier rechts und links vom Sägeaggregat 4, ein die Anschlagfläche für das Werkstück vergrößernder Zusatzanschlag 14 angeordnet ist. Der Zusatzanschlag 14 ist zwischen einer in Fig. 1 erkennbaren Grundposition nahe dem Sägeaggregat 4 und einer vom Sägeaggregat 4 entfernten Distanzposition, gezeigt in Fig. 2, in Breitenrichtung verstellbar.

Die Lehre der Erfindung ist darauf gerichtet, daß der Zusatzanschlag 14 zumindest an seinem freien Ende im wesentlichen bis auf das Niveau der Werkstückauflagefläche 2 reicht. Im dargestellten und bevorzugten Ausführungsbeispiel sieht das so aus, daß der Zusatzanschlag 14 an seinem freien Ende im wesentlichen bis auf das Niveau der mit der Werkstückauflagefläche 2 fluchtenden Zusatzfläche 10 am Zusatzträger 11 reicht.

Wesentlich ist, daß auch flache bzw. dünne Werkstücke an dem Zusatzanschlag 14, zumindest an dessen freiem Ende angelegt werden können. Wenn hier noch ein geringer Restspalt im Rahmen üblicher Toleranzen verbleibt, so ist das für die Verwirklichung der Lehre der Erfindung nicht schädlich.

Im dargestellten und erfindungsgemäßen Ausführungsbeispiel gemäß Fig. 1 und 2 gilt, daß der Zusatzanschlag 14 vom Zusatzträger 11 nicht unabhängig ist, sondern daß das freie Ende des Zusatzanschlags 14 mit dem Zusatzträger 11 lösbar verbunden ist.

Interessant bei dieser Konstruktion ist insbesondere, daß beim seitlichen Verstellen des Zusatzträgers 11 gegenüber dem Träger 1 der Zusatzanschlag 14 gegenüber dem Werkstückanschlag 6 mitverstellt wird.

Das in Fig. 1 und 2 dargestellte Ausführungsbeispiel zeigt eine Konstruktion, bei der vorgesehen ist, daß der Zusatzanschlag 14 auf der Oberseite des Werkstückanschlags 6 angebracht ist und an seinem freien Ende einen im wesentlichen bis auf das Niveau der Werkstückauflagefläche 2 reichenden, bereits in der Grundposition fluchtend neben dem Werkstückanschlag 6 befindlichen Endabschnitt 15 aufweist. Diese Konstruktion greift Vorschläge des Standes Technik auf (US-A-2008/0022824).

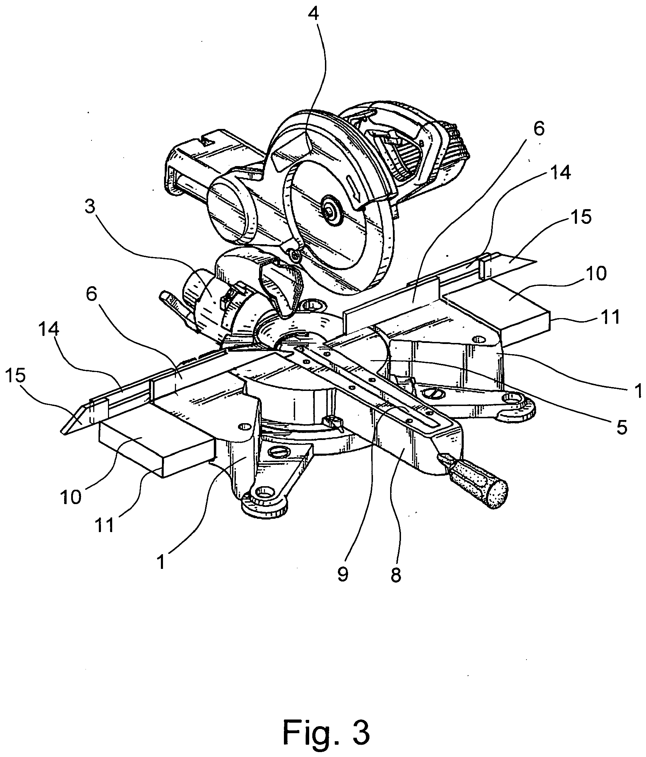

Demgegenüber zeigt das nicht erfindungsgemäße Beispiel in Fig. 3, daß der Zusatzanschlag 14 auf der Rückseite des Werkstückanschlags 6 angebracht ist und an seinem freien Ende einen bereits in der Grundposition fluchtend neben dem Werkstückanschlag 6 befindlichen Endabschnitt 15 aufweist. Hier erkennt man auch, daß hier der Zusatzanschlag 14 vom Zusatzträger 11 unabhängig ist.

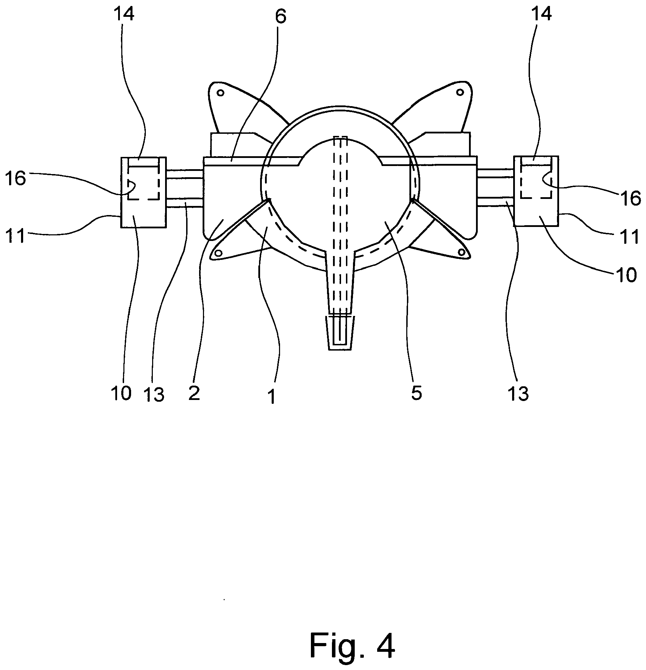

Eine unabhängige, eigenständige Alternative zur bisher beschriebenen Lösung geht aus von einer Kapp- und Gehrungssäge mit einem Träger 1, der eine Werkstückauflagefläche 2 bildet, und einer am Träger 1 angebrachten Halterung 3 für ein oberhalb der Werkstückauflagefläche 2 angeordnetes, in Grundstellung eine Sägeschnittrichtung definierendes Sägeaggregat 4, mit einem am Träger 1 angebrachten, in der mittigen Grundstellung des Sägeaggregates 4 auf der Werkstückauflagefläche 2 quer zur Sägeschnittrichtung verlaufenden Werkstückanschlag 6 für ein auf der Werkstückauflagefläche 2 befindliches Werkstück, wobei die Werkstückauflagefläche 2 quer zur Sägeschnittrichtung eine bestimmte Breite aufweist und wobei die Breite des Werkstückanschlags 6 ungefähr der Breite der Werkstückauflagefläche 2 entspricht. Dies ist in Fig. 4 dargestellt.

Hier wird das der Erfindung zugrundeliegende Problem dadurch gelöst, daß am Träger 1 zumindest an einer Seite ein eine Zusatzfläche 10 bildender Zusatzträger 11 anbringbar ist, durch den die für die Unterstützung eines Werkstückes wirksame Breite der Werkstückauflagefläche 2 vergrößerbar ist, daß die Zusatzfläche 10 des am Träger 1 angebrachten Zusatzträgers 11 gegenüber dem Träger 1 zwischen einer dem Träger 1 nahen Grundposition und einer vom Träger 1 entfernten Distanzposition verstellbar ist und daß am Zusatzträger 11 an oder auf der Zusatzfläche 10 ein mit dem Werkstückanschlag 6 in Breitenrichtung fluchtender, den Werkstückanschlag 6 verlängernder Zusatzanschlag 14 angebracht ist.

Der Zusatzanschlag 14 ist hier also von vornherein am Zusatzträger 11 angebracht bzw. Teil des Zusatzträgers 11. Insbesondere kann man vorsehen, wie in Fig. 4 angedeutet, daß der Zusatzanschlag 14 am Zusatzträger 11 aus einer aufgerichteten Anschlagstellung in eine versenkte Ruhestellung und umgekehrt verstellbar, insbesondere klappbar ist. Man erkennt in Fig. 4 in der in Draufsicht gezeigten Zusatzfläche 10 eine Aufnahme 16, in die der Zusatzanschlag 14, der in Fig. 4 in der aufgerichteten Anschlagstellung gezeichnet ist, hinein versenkt werden kann.

## Patentansprüche

1. Kapp- und Gehrungssäge
mit einem Träger (7.), der eine Werkstückauflagefläche (2) bildet, und einer am Träger (1) angebrachten Halterung (3) für ein oberhalb der Werkstückauflagefläche (2) angeordnetes, in Grundstellung eine Sägeschnittrichtung definierendes Sägeaggregat (4),
mit einem am Träger (1) angebrachten, in der mittigen Grundstellung des Sägeaggregates (4) auf der Werkstückauflagefläche (2) quer zur Sägeschnittrichtung verlaufenden Werkstückanschlag (6) für ein auf der Werkstückauflagefläche (2) befindliches Werkstück,
wobei die Werkstückauflagefläche (2) quer zur Sägeschnittrichtung eine bestimmte Breite aufweist und wobei die Breite des Werkstückanschlags (6) ungefähr der Breite der Werkstückauflagefläche (2) entspricht,
wobei an dem Werkstückanschlag (6) rechts und/oder links des Sägeaggregates (4) ein die Anschlagfläche für das Werkstück vergrößernder Zusatzanschlag (14) angeordnet ist,
wobei der Zusatzanschlag (14) zwischen einer Grundposition nahe dem Sägeaggregat (4) und einer vom Sägeaggregat (4) entfernten Distanzposition in Breitenrichtung verstellbar ist und zumindest an seinem freien Ende im wesentlichen bis auf das Niveau der Werkstückauflagefläche (2) reicht, **dadurch gekennzeichnet, dass** am Träger (1) zumindest an einer Seite ein eine Zusatzfläche (10) bildender Zusatzträger (11) angebracht ist, durch den die für die Unterstützung eines Werkstückes wirksame Breite der Werkstückauflagefläche (2) vergrößerbar ist, wobei die Zusatzfläche (10) des am Träger (1) angebrachten Zusatzträgers (11) gegenüber dem Träger (1) zwischen einer dem Träger (1) nahen Grundposition und einer vom Träger (1) entfernten Distanzposition verstellbar ist,
dass das freie Ende des Zusatzanschlags (14) mit dem Zusatzträger (11) verbunden ist, und dass die Verbindung lösbar
ist.

2. Kapp- und Gehrungssäge nach Anspruch 1, **dadurch gekennzeichnet,**
**daß** der Zusatzanschlag (14) auf der Oberseite des Werkstückanschlags (6) angebracht ist und an seinem freien Ende einen im wesentlichen bis auf das Niveau der Werkstückauflagefläche (2) reichenden, bereits in der Grundposition fluchtend neben dem Werkstückanschlag (6) befindlichen Endabschnitt (15) aufweist.

3. Kapp- und Gehrungssäge nach Anspruch 1, **dadurch gekennzeichnet,**
**daß** der Zusatzanschlag (14) auf der Rückseite des Werkstückanschlags (6) angebracht ist und an seinem freien Ende einen im wesentlichen bis auf das Niveau der Werkstückauflagefläche (2) reichenden, bereits in der Grundposition fluchtend neben dem Werkstückanschlag (6) befindlichen Endabschnitt (15) aufweist,

4. Kapp- und Gehrungssäge nach einem der vorhergehenden Ansprüche, **dadurch gekennzeichnet,**
**daß** beim seitlichen Verstellen des Zusatzträgers (11) gegenüber dem Träger (1) der Zusatzanschlag (14) gegenüber dem Werkstückanschlag (6) mitverstellt wird.

5. Kapp- und Gehrungssäge
mit einem Träger (1), der eine Werkstückauflagefläche (2) bildet, und einer am Träger (1) angebrachten Halterung (3) für ein oberhalb der Werkstückauflagefläche (2) angeordnetes, in Grundstellung eine Sägeschnittrichtung definierendes Sägeaggregat (4),
mit einem am Träger (1) angebrachten, in der mittigen Grundstellung des Sägeaggregates (4) auf der Werkstückauflagefläche (2) quer zur Sägeschnittrichtung verlaufenden Werkstückanschlag (6) für ein auf der Werkstückauflagefläche (2) befindliches Werkstück,
wobei die Werkstückauflagefläche (2) quer zur Sägeschnittrichtung eine bestimmte Breite aufweist und wobei die Breite des Werkstückanschlags (6) ungefähr der Breite der Werkstückauflagefläche (2) entspricht,
**dadurch gekennzeichnet,**
**daß** am Träger (1) zumindest an einer Seite ein eine Zusatzfläche (10) bildender Zusatzträger (11) angebracht ist, durch den die für die Unterstützung eines Werkstückes wirksame Breite der Werkstückauflagefläche (2) vergrößerbar ist,
**daß** die Zusatzfläche (10) des am Träger (1) angebrachten Zusatzträgers (11) gegenüber dem Träger (1) zwischen einer dem Träger (1) nahen Grundposition und einer vom Träger (1) entfernten Distanzposition verstellbar ist und
**daß** am Zusatzträger (11) an oder auf der Zusatzfläche (10) ein mit dem Werkstückanschlag (6) in Breitenrichtung fluchtender, den Werkstückanschlag (6) verlängernder Zusatzanschlag (14) angebracht ist.

6. Kapp- und Gehrungssäge nach Anspruch 5, **dadurch gekennzeichnet,**
**daß** der Zusatzanschlag (14) am Zusatzträger (11) aus einer aufgerichteten Anschlagstellung in eine versenkte Ruhestellung und umgekehrt verstellbar, insbesondere klappbar ist.

## Claims

1. Crosscut and mitre saw
having a carrier (1) which forms a workpiece support surface (2), and a mount (3), attached to the carrier (1), for a saw unit (4) that is arranged above the workpiece support surface (2) and defines a saw cut direction in a basic position,
having a workpiece stop (6) for a workpiece located on the workpiece support surface (2), said workpiece stop (6) being attached to the carrier (1) and extending transversely to the saw cut direction in the central basic position of the saw unit (4) on the workpiece support surface (2),
wherein the workpiece support surface (2) has a particular width transversely to the saw cut direction, and wherein the width of the workpiece stop (6) corresponds approximately to the width of the workpiece support surface (2),
wherein an auxiliary stop (14) that enlarges the stop surface for the workpiece is arranged on the workpiece stop to the right and/or left of the saw unit (4),
wherein the auxiliary stop (14) is adjustable widthwise between a basic position close to the saw unit (4) and a spaced-apart position away from the saw unit (4), and reaches, at least at its free end, substantially as far as the level of the workpiece support surface (2),
**characterized in that**
an auxiliary carrier (11) that forms an auxiliary face (10) is attached to the carrier (1) at least on one side, it being possible, by way of said auxiliary carrier (11), to enlarge the effective width, for supporting a workpiece, of the workpiece support surface (2), wherein the auxiliary surface (10) of the auxiliary carrier (11) attached to the carrier (1) is adjustable with respect to the carrier (1) between a basic position close to the carrier (1) and a spaced-apart position away from the carrier (1),
**in that** the free end of the auxiliary stop (14) is connected to the auxiliary carrier (11), and
**in that** the connection is releasable.

2. Crosscut and mitre saw according to Claim 1, **characterized**
**in that** the auxiliary stop (14) is attached to the top side of the workpiece stop (6) and has, at its free end, an end portion (15) that reaches substantially as far as the level of the workpiece support surface (2) and is already located in the basic position in an aligned manner next to the workpiece stop (6).

3. Crosscut and mitre saw according to Claim 1, **characterized**
**in that** the auxiliary stop (14) is attached to the rear side of the workpiece stop (6) and has, at its free end, an end portion (15) that reaches substantially as far as the level of the workpiece support surface (2) and is already located in the basic position in an aligned manner next to the workpiece stop (6).

4. Crosscut and mitre saw according to one of the preceding claims,
**characterized**
**in that** when the auxiliary carrier (11) is adjusted laterally with respect to the carrier (1), the auxiliary stop (14) is adjusted along therewith with respect to the workpiece stop (6).

5. Crosscut and mitre saw
having a carrier (1) which forms a workpiece support surface (2), and a mount (3), attached to the carrier (1), for a saw unit (4) that is arranged above the workpiece support surface (2) and defines a saw cut direction in a basic position,
having a workpiece stop (6) for a workpiece located on the workpiece support surface (2), said workpiece stop (6) being attached to the carrier (1) and extending transversely to the saw cut direction in the central basic position of the saw unit (4) on the workpiece support surface (2),
wherein the workpiece support surface (2) has a particular width transversely to the saw cut direction, and wherein the width of the workpiece stop (6) corresponds approximately to the width of the workpiece support surface (2),
**characterized**
**in that** an auxiliary carrier (11) that forms an auxiliary face (10) is attached to the carrier (1) at least on one side, it being possible, by way of said auxiliary carrier (11), to enlarge the effective width, for supporting a workpiece, of the workpiece support surface (2),
**in that** the auxiliary surface (10) of the auxiliary carrier (11) attached to the carrier (1) is adjustable with respect to the carrier (1) between a basic position close to the carrier (1) and a spaced-apart position away from the carrier (1), and
**in that** an auxiliary stop (14) that is aligned with the workpiece stop (6) in the widthwise direction and extends the workpiece stop (6) is attached to the auxiliary carrier (11) on the auxiliary surface (10).

6. Crosscut and mitre saw according to Claim 5, **characterized in that** the auxiliary stop (14) is adjustable, in particular flappable, on the auxiliary carrier (11) from an upright stop position into a lowered rest position and vice versa.

## Revendications

1. Scie à onglet
avec un support (1), qui forme une surface d'appui (2) pour une pièce à travailler, et une fixation (3) montée sur le support (1), pour un agrégat de sciage (4), disposé au-dessus de la surface d'appui (2) pour une pièce à travailler, et défini dans la position de base d'une installation de sciage,
avec une butée (6) d'appui de la pièce à travailler s'étendant transversalement par rapport à la direction de coupe, montée sur le support (1), dans la position de base centrale de l'agrégat de sciage (4), sur la surface d'appui (2) pour une pièce à travailler, pour une pièce à travailler se trouvant sur la surface d'appui (2),
dans laquelle la surface d'appui (2) pour une pièce à travailler présente transversalement par rapport à la direction de coupe du sciage une certaine largeur, et dans laquelle la largeur de la butée (6) d'appui de la pièce à travailler correspond à la largeur de la surface d'appui (2) pour une pièce à travailler, dans laquelle une butée d'appui complémentaire (14) agrandissant la butée d'appui (6) est montée à droite ou à gauche de l'agrégat de sciage (4),
dans laquelle la butée d'appui complémentaire (14) est réglable dans le sens de la largeur entre une position de base proche de l'agrégat de sciage (4) et une position distancée éloignée de l'agrégat de sciage (4) et s'étend au moins à son extrémité libre, sensiblement jusqu'au niveau de la surface d'appui (2) pour une pièce à travailler,
**caractérisée en ce qu'**
une surface complémentaire (10) constitué par un support additionnel (11) est monté au moins d'un côté, par lequel, pour assurer le soutien d'une pièce à travailler une surface d'appui (2) pour une pièce à travailler pouvant être agrandie est requise, dans laquelle la surface complémentaire (10) du support complémentaire (11) ménagée sur le support (1) est disposée en face du support (1) entre une position de base proche du support (1) et une position distancée réglable, éloignée du support, **en ce que** l'extrémité libre (14) est liée à la butée complémentaire (14) avec le support complémentaire (11), et **en ce que** la liaison est amovible.

2. Scie à onglet selon la revendication 1, **caractérisée en ce que**,
la butée d'appui complémentaire (14) est montée sur la face supérieure de la butée d'appui (6) de la pièce à travailler et comporte son extrémité libre, s'étendant essentiellement jusqu'au niveau de la surface d'appui (2), de la pièce à travailler, et se trouve dans la position de base, en biais à côté de la butée d'appui (6) dans le secteur d'extrémité (15).

3. Scie à onglet selon la revendication 1, **caractérisée en ce que**,
la butée d'appui complémentaire (14) est montée sur la face arrière de la butée d'appui (6) de la pièce à travailler et comporte son extrémité libre, s'étendant essentiellement jusqu'au niveau de la surface d'appui (2), de la pièce à travailler, et se trouve dans la position de base, en biais à côté de la butée d'appui (6) dans le secteur d'extrémité (15).

4. Scie à onglet selon l'une des revendications précédentes, **caractérisée en ce que**,
lors du réglage latéral du support complémentaire (11) par rapport au support (1), la butée d'appui complémentaire (14) est déplacée avec la butée d'appui (6) de la pièce à travailler.

5. Scie à onglet,
avec un support (1), qui forme une surface d'appui (2) pour une pièce à travailler, et une fixation (3) montée sur le support (1), pour un agrégat de sciage (4), disposé au-dessus de la surface d'appui (2) pour une pièce à travailler, et défini dans la position de base d'une installation de sciage,
avec une butée (6) d'appui de la pièce à travailler s'étendant transversalement par rapport à la direction de coupe, montée sur le support (1), dans la position de base centrale de l'agrégat de sciage (4), sur la surface d'appui (2) pour une pièce à travailler, pour une pièce à travailler se trouvant sur la surface d'appui (2),
dans laquelle la surface d'appui (2) pour une pièce à travailler présente transversalement par rapport à la direction de coupe du sciage une certaine largeur, et dans laquelle la largeur de la butée (6) d'appui de la pièce à travailler correspond à la largeur de la surface d'appui (2) pour une pièce à travailler,
**caractérisée en ce que**,
le support (1) est pourvu au moins sur un côté d'un support complémentaire (11) formant une surface complémentaire (10), par lequel la largeur active de la surface d'appui (2) d'une pièce à travailler peut être agrandie,
**en ce que** la surface complémentaire (10) du support complémentaire (11) monté sur le support (1) peut être réglée entre une position de base proche du support (1) et une position distante éloignée du support (1) et
**en ce que** sur le support complémentaire (11) et/ou sur la surface complémentaire (10) est monté une butée complémentaire (14) qui prolonge la butée d'appui (6) de la pièce à travailler dirigée dans le sens de la largeur et divergente avec la butée d'appui (6) de la pièce à travailler.

6. Scie à onglet selon la revendication 5, **caractérisée en ce que**,
la butée d'appui complémentaire (14) sur le support complémentaire (11) est agencée pour pouvoir être déplacée d'une position opérationnelle déployée dans une position rétractée de repos et inversement, en particulier de façon pliante.
